**Europäisches Patentamt**

**European Patent Office**

**Office européen des brevets**

(19)

(11) Veröffentlichungsnummer: **0 152 127**
**A2**

## (12) EUROPÄISCHE PATENTANMELDUNG

(21) Anmeldenummer: 85200052.0

(22) Anmeldetag: 21.01.85

(51) Int. Cl.⁴: $H\ 02\ H\ 9/06$

(30) Priorität: 26.01.84 DE 3402581

(43) Veröffentlichungstag der Anmeldung:
21.08.85 Patentblatt 85/34

(84) Benannte Vertragsstaaten:
DE FR GB

(71) Anmelder: Philips Patentverwaltung GmbH
Billstrasse 80
D-2000 Hamburg 28(DE)

(84) Benannte Vertragsstaaten:
DE

(71) Anmelder: N.V. Philips' Gloeilampenfabrieken
Groenewoudseweg 1
NL-5621 BA Eindhoven(NL)

(84) Benannte Vertragsstaaten:
FR GB

(72) Erfinder: Elsner, Hans
Auf den Roden 7a
D-2800 Bremen(DE)

(72) Erfinder: Prendel, Peter
Wiesenstrasse 4
D-2803 Weyhe(DE)

(74) Vertreter: Poddig, Dieter et al,
Philips Patentverwaltung GmbH Billstrasse 80 Postfach
10 51 49
D-2000 Hamburg 28(DE)

(54) Anordnung zum Unterdrücken von Überspannungsspitzen.

(57) Für den Schutz von elektronischen Geräten gegenüber Spannungsspitzen, insbesondere solche, die durch NEMP erzeugt werden, wird in den Leitungszug der von außen kommenden Leitungen eine Anordnung aus mehreren, in Reihe geschalteten Tiefpaßfiltern mit spannungsbegrenzenden Elementen eingefügt, die in ein Gehäuse mit elektrisch leitender Innenwand eingebaut sind, das in mehrere Kammern unterteilt ist. Durch die Tiefpässe wird die Vorderflanke einer eintreffenden Überspannungsspitze so weit abgeflacht, daß die letzten spannungsbegrenzenden Mittel in der Reihenschaltung rechtzeitig ansprechen können und die Überspannungsspitze wirksam begrenzen, während durch den Einbau der elektrischen Elemente in das Gehäuse mit getrennten Kammern eine Überkopplung hochfrequenter Signalanteile vermieden wird.

FIG.1

EP 0 152 127 A2

"Anordnung zum Unterdrücken von Überspannungsspitzen"

Die Erfindung betrifft eine Anordnung zum Unterdrücken von Überspannungsspitzen auf in ein mit einer geschlossenen elektrisch leitenden Oberfläche versehenes elektronisches Gerät führenden Leitungen, insbesondere auf den Stromversorgungszuleitungen, mit in einem Gehäuse angeordneten spannungsbegrenzenden Elementen zwischen den Leitungen untereinander und zwischen den Leitungen einzeln und einem gemeinsamen Bezugspunkt, vorzugsweise das Gehäuse, sowie mit Tiefpässen aus Längsinduktivitäten und Querkapazitäten.

Überspannungsspitzen auf Leitungen können durch verschiedene Ursachen erzeugt werden, insbesondere bei Stromversorgungszuleitungen durch Schaltvorgänge anderer angeschlossener Verbraucher oder durch Blitzeinwirkungen. Durch die verschiedenen Ursachen werden normalerweise auch unterschiedliche Formen bzw. Zeitverläufe der Überspannungsspitzen erzeugt, wobei solche mit steilen Anstiegsflanken am schwierigsten zu beseitigen sind, da die spannungsbegrenzenden Elemente praktisch alle gewisse Ansprechverzögerungen aufweisen. Besonders kritisch in dieser Hinsicht sind durch NEMP, d.h. durch in großer Höhe gezündete nukleare Sprengsätze ausgelöste elektromagnetische Pulse, erzeugte Überspannungsspitzen. Derartige Überspannungsspitzen weisen Flankensteilheiten von unter 10 ns bei sehr hohen Energien auf. Wenn solche Überspannungsspitzen nicht ausreichend beseitigt werden, können diese in elektronischen Geräten, die mit modernen Halbleiterbauelementen aufgebaut sind, beträchtliche Schäden anrichten.

Zum Unterdrücken bzw. Vermindern von Überspannungsspitzen ist es allgemein bekannt, spannungsbegrenzende Elemente in Verbindung mit Tiefpässen aus Längsinduktivitäten und Querkapazitäten zu verwenden. Üblicherweise wird für jede Leitung eine derartige Kombination eingesetzt. Bei sehr steilen Flanken von Überspannungsspitzen wie solche durch NEMP ausgelöst ist die Ansprechgeschwindigkeit der üblichen spannungsbegrenzenden Elemente jedoch nicht völlig ausreichend, um am Ausgang einer Kombination aus einem spannungsbegrenzenden Element und einem Tiefpaß eine für moderne Halbleiterbauelemente verträgliche Begrenzung der Überspannungsspitzen zu erreichen. Eine Verbesserung könnte durch Reihenschaltung von mehreren derartiger Kombinationen erreicht werden, jedoch ist dann durch Hochfrequenz-Kopplungen zwischen Eingang und Ausgang eine ausreichende Begrenzung der Überspannungsspitzen nicht ohne weiteres möglich.

Aufgabe der Erfindung ist es, eine Anordnung der eingangs genannten Art anzugeben, die eine zuverlässige Begrenzung von Überspannungsspitzen, die auch in sehr hohen Frequenzbereichen sehr hohe Energieanteile aufweisen, zuverlässig erreicht.

Diese Aufgabe wird erfindungsgemäß dadurch gelöst, daß in dem Gehäuse mehrere in Reihe geschaltete Tiefpässe in getrennten, räumlich hintereinander angeordneten Kammern vorgesehen sind, von denen zumindest die geräteseitigste Kammer gegen die vorhergehenden Kammern hochfrequenzdicht abgeschlossen ist, daß jeder Tiefpaß ausgangsseitig über einen Überspannungsableiter mindestens mit dem Bezugspunkt verbunden ist, und daß das Gehäuse mindestens auf der gesamten Innenseite elektrisch leitend ist und die Befestigungselemente des Gehäuses so ausgebildet sind, daß ein guter elektrischer Übergang von der leitenden Innenseite auf die leitende Oberfläche des elektronischen Gerätes herstellbar ist.

0152127

Der Erfindung liegt das Prinzip zugrunde, die Vorderflanke der Überspannungsspitzen zu längeren Anstiegszeiten hin zu verschleifen, die ein einwandfreies Reagieren üblicher spannungsbegrenzender Elemente ermöglichen. Dabei müssen die leitungsseitigen Tiefpässe besonders für hohe Frequenzen geeignet sein, während andererseits eine zu scharfe Begrenzung von Überspannungen leitungsseitig noch nicht erforderlich ist, sondern diese erfolgt erst im Bereich des Ausgangs der Anordnung. Die Ausgänge der Tiefpässe können dabei über weitere Überspannungsableiter auch untereinander verbunden sein. Durch den Aufbau aus mehreren, zumindest zum Teil weitgehend gegeneinander elektromagnetisch geschirmten Kammern, in denen die spannungsbegrenzenden Elemente und die Tiefpässe nacheinander angeordnet sind, werden auch Überkopplungen vom Eingang zum Ausgang weitestgehend vermieden.

Eine Ausgestaltung der Erfindung, die dieses Prinzip besonders weitgehend berücksichtigt, ist dadurch gekennzeichnet, daß in der zuleitungsseitigen Kammer jeder Leitungsanschluß nur mit dem einen Ende einer ersten Längsinduktivität verbunden ist, daß die anderen Enden der ersten Längsinduktivitäten über erste Kapazitäten mindestens mit dem Bezugspunkt, über Funkenstrecken untereinander und mit dem Bezugspunkt und mit den einen Enden von Schmelzsicherungen verbunden sind, wobei die Funkenstrecken als zwei benachbarte Kammern trennende Querwand ausgebildet sind, daß die anderen Enden der Schmelzsicherungen über Überspannungsableiter mit dem Bezugspunkt und untereinander sowie mit den Eingängen eines weitere Längsinduktivitäten und weitere Querkapazitäten enthaltenden, vollständig metallisch hochfrequenzdicht gekapselten Leitungsfilters verbunden sind, wobei die Kapselung des Leitungsfilters den Abschluß der geräteseitigsten Kammer bildet, in der die Ausgänge des Leitungsfilters über Varistoren miteinander und mit Durchführungs-Kondensatoren verbunden sind, die in Öffnungen des Gehäuses angebracht sind und die in das elektronische Gerät führen. Auf diese Weise werden die Vorderflanken der Überspannungsspitzen besonders wirksam stufenweise abgeflacht, wobei das Leitungsfilter, für das ein Standard-Bauteil verwendet werden kann, an einer Stelle eingesetzt ist, an der die Energien in den höchsten Frequenzbereichen bereits stark verringert sind.

Ein Ausführungsbeispiel der Erfindung wird nachstehend anhand der Zeichnung näher erläutert. Es zeigen

Fig. 1 das elektrische Schaltbild der Anordnung,

Fig. 2 die räumliche Draufsicht und Seitenansicht der Anordnung,

Fig. 3 eine Möglichkeit zur Ausbildung der Funkenstrecken.

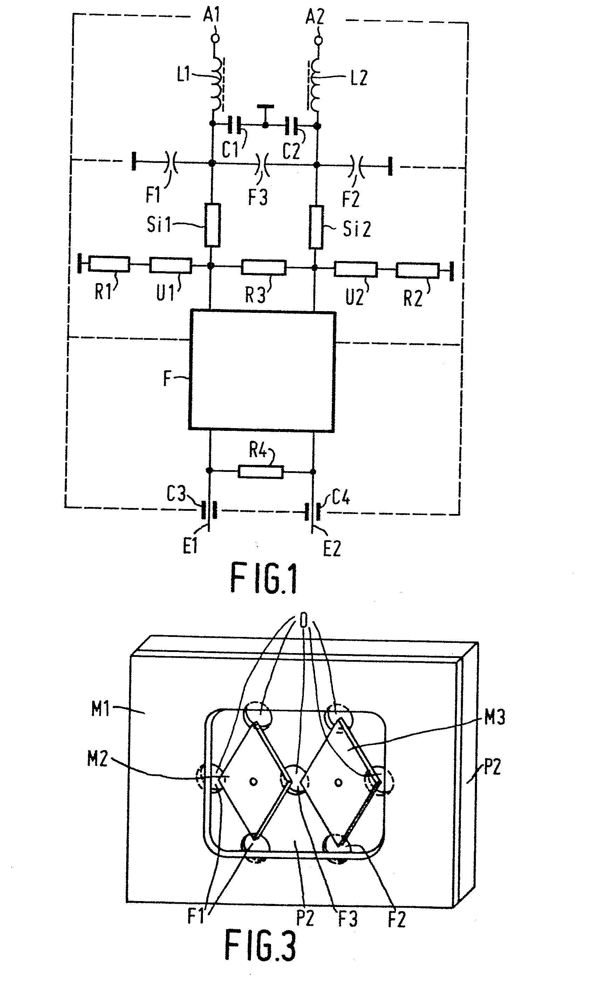

In Fig. 1 führen die Leitungsanschlüsse A1 und A2, an die ein von außen kommendes Stromversorgungskabel angeschlossen wird, auf je eine erste Längsinduktivität L1 und L2. Diese enthalten zwar einen Eisenkern, um die Induktivität zu erhöhen, jedoch ist der magnetische Kreis über Luftspalte geschert, um Sättigungseffekte zu vermeiden.

Die anderen Enden der Drosseln L1 und L2 sind über Kondensatoren C1 und C2 mit dem Bezugspunkt verbunden. Diese Kondensatoren müssen für relativ hohe Spannungen geeignet sein. Ferner sind die anderen Enden der Drosseln L1 und L2 über Funkenstrecken F1 und F2 mit dem Bezugspunkt und über eine Funkenstrecke F3 untereinander verbunden, um unzulässige Spannungsunterschiede zwischen den beiden Leitungen auch direkt zu unterdrücken.

Schließlich führen die anderen Enden der Drosseln L1 und L2 über Schmelzsicherungen Si1 und Si2 auf zwei Knotenpunkte, die untereinander über einen Varistor R3 sowie ferner mit je einem Überspannungsableiter U1 und U2 mit relativ niedriger Ansprechspannung verbunden sind. Die Überspannungsableiter U1 und U2 führen nun nicht direkt gegen den Bezugspunkt, sondern über weitere Varistoren R1 und R2, die im normalen Ansprechfall den Haltestrom der Überspannungsableiter U1 und U2 begrenzen.

Ferner führen die Knotenpunkte auf die Eingänge eines Leitungsfilters F, das eine fertige käuflich erhältliche Baueinheit ist, beispielsweise der Typ "CORCOM 3W1A" der Firma CORCOM GmbH, Neuried und das ebenfalls aus Längsinduktivitäten und Querkapazitäten aufgebaut ist, die in ein elektromagnetisch abschirmendes Gehäuse eingesetzt sind.

Die Ausgänge dieses Filters F sind über einen weiteren Varistor R4 miteinander und mit Durchführungskondensatoren C3 und C4 verbunden, die die zum nachfolgenden elektronischen Gerät führenden Anschlüsse E1 und E2 bilden. Die Durchführungskondensatoren C3 und C4 führen durch die Wandung eines elektromagnetisch abschirmenden Gehäuses, das durch die gestrichelten Linien angedeutet ist und in das alle beschriebenen Bauelemente eingesetzt sind. Ferner bildet dieses Gehäuse drei Kammern, wie durch die zum Leitungsfilter F und zu den Funkenstrecken F1 und F2 führenden gestrichelten Linien angedeutet ist.

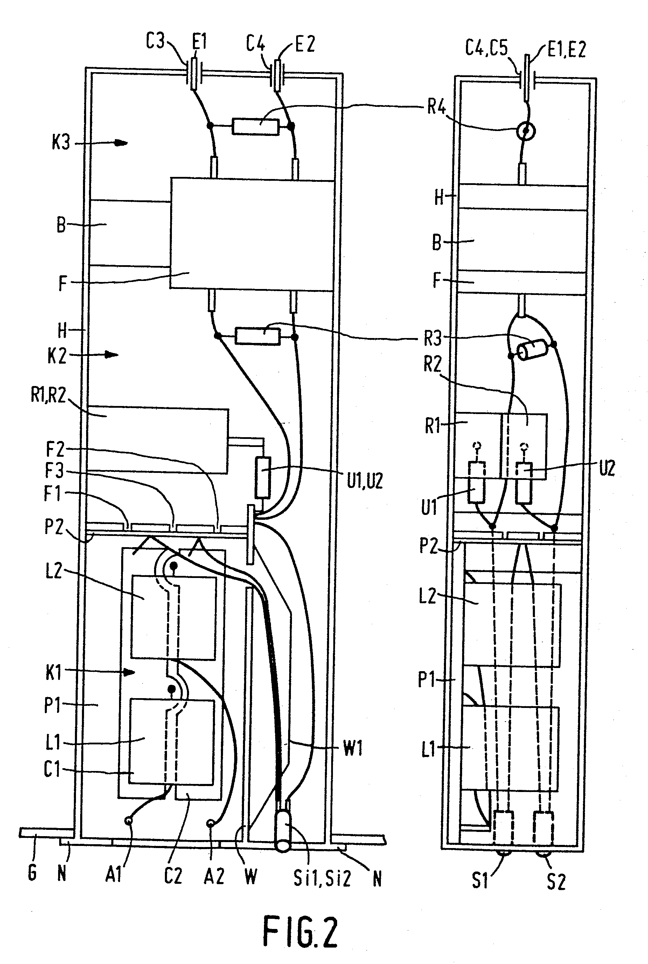

In Fig. 2 ist die räumliche Anordnung der in Fig. 1 angegebenen elektrischen Elemente in einem Gehäuse H dargestellt. Die Anschlußklemmen A1 und A2, in deren Bereich eine Öffnung in dem Gehäuse H für das von außen kommende Kabel vorhanden ist, sind auf einer Isolierstoffplatte P1 angeordnet, die den Boden der Kammer K1 weitgehend

ausfüllt, die durch die innere Seitenwand W und die weitere Platte P2 aus Isoliermaterial gebildet wird. Die Oberfläche der Platte P1 ist teilweise mit zwei elektrisch leitenden Belägen C1 und C2 bedeckt, die im Zusammenhang mit einem Belag auf der Rückseite der Platte P1 oder dem Boden des Gehäuses H die entsprechenden Kondensatoren bilden. Ferner sind auf der Platte P1 zwei Drosseln L1 und L2 befestigt. Die einen Anschlüsse der Drosseln L1 und L2 sind mit den Klemmen A1 und A2 verbunden, und die anderen Anschlüsse sind, teilweise über die die Kondensatoren C1 und C2 bildenden elektrisch leitenden Beläge, mit drei Funkenstrecken F1 bis F3 verbunden, deren mechanischer Aufbau anhand der Fig. 3 später erläutert wird. Von den Funkenstrecken aus führen Leitungen zu je einer Sicherung Si1 und Si2, die an der Vorderseite des Gehäuses H neben den Anschlußklemmen A1 und A2, jedoch durch die Wand W von diesen getrennt angeordnet sind. Von den anderen Anschlüssen dieser Sicherungen Si1, Si2 führen zwei Kabel, die von den Zuleitungen zu den Sicherungen durch eine Blechwand W1 getrennt sind, zu zwei Lötstützpunkten, die an der Platte P2 bzw. isoliert an der Wand W befestigt sind. Von jedem dieser beiden Lötstützpunkte führt ein Überspannungsableiter U1, U2 zu einem als Block ausgebildeten Varistor R1, R2, die an der Seitenwand des Gehäuses H befestigt und dadurch mit dieser leitend verbunden sind. Ferner führen von den Lötstützpunkten Leitungen zu den Anschlüssen eines Leitungsfilters F, die kurz vor oder zweckmäßig an diesen Anschlüssen durch einen weiteren Varistor R3 miteinander verbunden sind. Dieses Leitungsfilter F ist praktisch hochfrequenzdicht gekapselt und bildet die hochfrequenzmäßig dichte Abschirmung zwischen der Kammer K2 und der Kammer K3, indem die Kapselung des Leitungsfilters F mechanisch dicht und elektrisch leitend mit den Wandungen des Gehäuses H verbunden wird. Dafür dienen gegebenenfalls gefiederte

**0152127**

Blechstreifen. Größere Zwischenräume, die durch die Abmessungen des Leitungsfilters F und den Innenraum des Gehäuses H gebildet werden, können durch Blechwände oder, wie in Fig. 2 dargestellt, durch einen massiven Metallblock B ausgefüllt werden.

Die in der Kammer K3 liegenden Ausgangsanschlüsse des Leitungsfilters F sind wieder durch einen weiteren Varistor R4 miteinander und über Leitungen mit Durchführungskondensatoren C3 und C4 verbunden, die in Öffnungen des Gehäuses H eingesetzt und deren Außenbeläge elektrisch mit diesem leitend verbunden sind, vorzugsweise durch Löten. Die äußeren Anschlüsse E1 und E2 dieser Durchführungskondensatoren C3 und C4 bilden die Zuleitungsanschlüsse für das elektronische Gerät, in das das Gehäuse H1 eingesetzt ist.

Die äußere, ebenfalls elektrisch leitende Wand G des elektronischen Gerätes ist mit einem flanschartigen Rand N des Gehäuses H mechanisch und auch elektrisch verbunden, so daß die leitende Innenwand des Gehäuses H einen guten elektrischen Übergang zu der äußeren Oberfläche des elektronischen Gerätes G aufweist und elektrisch gesehen eine Einstülpung der elektrisch leitenden Oberfläche des elektronischen Gerätes darstellt.

Der Aufbau der Funkenstrecken F1, F2 und F3 auf der Isolierstoffplatte P2 ist in Fig. 3 näher dargestellt. Diese ist von einer ersten Metallfläche M1 bedeckt, die bis zum Rand der Platte P2 gehen kann und die in der Mitte eine Öffnung aufweist. In dieser Öffnung sind zwei rautenförmige Metallflächen M2 und M3 voneinander und von der umgebenden Metallfläche isoliert angebracht. Die drei Spitzen der Metallfläche M2, die der Metallfläche M1 benachbart sind, bilden die Funkenstrecke F1, und die drei

0152127

Spitzen der Metallfläche M3, die der umgebenden Metallfläche M1 benachbart sind, bilden die Funkenstrecke F2.
Die einander benachbarten Spitzen der beiden Metallflächen
M2 und M3 bilden die Funkenstrecke F3. In den Bereichen
der Funkenstrecken F1, F2 und F3 sind in der Isolierstoffplatte P2 Öffnungen bzw. Bohrungen O angebracht, so daß
die Funkenstrecken F1, F2 und F3 nur von Luft umgeben sind
und sich keine Kriechstrecken auf der Isolierstoffplatte
P2 ausbilden können. Wenn die Isolierstoffplatte P2 ausreichend dick ist, können die Bohrungen O auch Sacklöcher
sein. Die Metallflächen M1, M2 und M3 können auf der der
Isolierstoffplatte P2 abgewandten Oberfläche mit einem
isolierenden Material bedeckt sein, das ebenfalls im
Bereich der Funkenstrecken F1, F2 und F3 Öffnungen aufweist.

In den Metallflächen M2 und M3 sind Öffnungen vorgesehen,
die durch Isolierstoffplatte P2 hindurchreichen und in
denen die Zuführungen von den Kondensatorbelägen C1 und C2
sowie die Zuführungen zu den Sicherungen Si1, Si2 verlötet
werden. Die Metallfäche M1 wird mit der leitenden Innenfläche des Gehäuses H in Fig. 2 in geeigneter Weise elektrisch verbunden. Diese Anordnung der Funkenstrecken
bildet dadurch eine teilweise elektromagnetisch abschirmende Trennung zwischen den beiden Kammern K1 und K2 in
Fig. 2.

PATENTANSPRÜCHE

1. Anordnung zum Unterdrücken von Überspannungsspitzen auf in ein mit einer geschlossenen elektrisch leitenden Oberfläche versehenes elektronisches Gerät führenden Leitungen, insbesondere auf den Stromversorgungszuleitungen, mit in einem Gehäuse angeordneten spannungsbegrenzenden Elementen zwischen den Leitungen untereinander und zwischen den Leitungen einzeln und einem gemeinsamen Bezugspunkt, vorzugsweise das Gehäuse, sowie mit Tiefpässen aus Längsinduktivitäten und Querkapazitäten, dadurch gekennzeichnet, daß in dem Gehäuse (H) mehrere in Reihe geschaltete Tiefpässe (L1, C1, L2, C2, F, C3, C4) in getrennten, räumlich hintereinander angeordneten Kammern (K1, K2, K3) vorgesehen sind, von denen zumindest die geräteseitigste Kammer (K3) gegen die vorhergehenden Kammern (K1, K2) hochfrequenzdicht abgeschlossen ist, daß jeder Tiefpaß (L1, C1, L2, C2, F, C3, C4) ausgangsseitig über einen Überspannungsableiter (F1, F2, F3, U1, U2, R1 bis R4) mindestens mit dem Bezugspunkt verbunden ist, und daß das Gehäuse (H) mindestens auf der gesamten Innenseite elektrisch leitend ist und die Befestigungselemente (N) des Gehäuses so ausgebildet sind, daß ein guter elektrischer Übergang von der leitenden Innenseite auf die leitende Oberfläche des elektronischen Gerätes (G) herstellbar ist.

2. Anordnung nach Anspruch 1, dadurch gekennzeichnet, daß in der zuleitungsseitigen Kammer (K1) jeder Leitungsanschluß (A1, A2) nur mit dem einen Ende einer ersten Längsinduktivität (L1, L2) verbunden ist, daß die anderen Enden der ersten Längsinduktivitäten (L1, L2) über erste Kapazitäten (C1, C2) mindestens mit dem Bezugspunkt, über Funkenstrecken (F1 bis F3) untereinander und mit dem Bezugspunkt und mit den einen Enden von Schmelzsicherungen (Si1, Si2) verbunden sind, wobei die Funkenstrecken als zwei benachbarte Kammern trennende Querwand ausgebildet sind, daß die anderen Enden der Schmelzsicherungen (Si1, Si2) über Überspannungsableiter (U1, U2, R1 bis R3) mit dem Bezugspunkt und untereinander sowie mit den Eingängen eines weitere Längsinduktivitäten und weitere Querkapazitäten enthal- tenden, vollständig metallisch hochfrequenzdicht gekap- selten Leitungsfilters (F) verbunden sind, wobei die Kapselung des Leitungsfilters (F) den Abschluß der geräteseitigsten Kammer (K3) bildet, in der die Ausgänge des Leitungsfilters (F) über Varistoren (R4) miteinander und mit Durchführungs-Kondensatoren (C3, C4) verbunden sind, die in Öffnungen des Gehäuses (H) angebracht sind und die in das elektronische Gerät führen.

3. Anordnung nach Anspruch 1 oder 2, dadurch gekennzeichnet, daß die Querkapazitäten (C1, C2) des ersten Tiefpasses durch leitende Beläge auf beiden Seiten einer Platte (P1) aus Isoliermaterial gebildet sind.

4. Anordnung nach Anspruch 2 oder 3, dadurch gekennzeichnet, daß die von den Schmelzsicherungen (Si1, Si2) abgewandten Seiten der Überspannungsableiter (U1, U2) über je einen weiteren Varistor (R1, R2) mit dem Bezugspunkt verbunden sind.

5. Anordnung nach Anspruch 2, 3 oder 4, dadurch gekennzeichnet, daß die Schmelzsicherungen (Si1, Si2) neben den Leitungsanschlüssen (A1, A2) und von diesen wenigstens teilweise elektromagnetisch abgeschirmt angeordnet sind.

6.   Anordnung nach Anspruch 2 oder einem der folgenden, dadurch gekennzeichnet, daß die Funkenstrecken (F1, F2, F3) aus in einer Ebene angeordneten plattenförmigen Metallteilen (M1, M2, M3) aufgebaut sind, von denen mindestens einige an mindestens einer Stelle spitz auslaufende Bereiche aufweisen.

1/2

0152127

FIG.1

FIG.3

0152127

**FIG.2**

2-Ⅱ-PHD 84-012